# FASCICULE DE BREVET EUROPEEN

(11) **EP 1 819 440 B1**
(45) Date de publication et mention de la délivrance du brevet: **23.07.2008**
(21) Numéro de dépôt: 05810811.9
(22) Date de dépôt: 12.10.2005
(51) Int. Cl.: B01L 5/00

(54) **DISPOSITIF POUR ASSAINIR ET/OU SECURISER UNE ENCEINTE DE CONFINEMENT DEFINIE DANS UN DISPOSITIF DE TRANSPORT ET/OU DE STOCKAGE DE MATIERES RADIOACTIVES**
VORRICHTUNG ZUR REINIGUNG UND/ODER SICHERUNG EINER EINDÄMMKAMMER IN EINER ZUM TRANSPORT UND/ODER ZUR SPEICHERUNG RADIOAKTIVER MATERIALIEN VERWENDETEN VORRICHTUNG
DEVICE FOR CLEANING AND/OR SECURING A CONTAINMENT CHAMBER DEFINED IN A DEVICE USED FOR THE TRANSPORT AND/OR STORAGE OF RADIOACTIVE MATERIALS

(30) Priorité: 07.12.2004 FR 0452884
(43) Date de publication de la demande: 22.08.2007
(73) Titulaire: TN International, 78182 Montigny Le Bretonneux (FR)
(72) Inventeur: CHIOCCA, René, F-75019 PARIS (FR); CHANSON, Daniel, F-44240 LA CHAPELLE SUR ERDRE (FR)
(74) Mandataire: Poulin, Gérard
(86) Numéro de dépôt international: PCT/FR2005/050841
(87) Numéro de publication internationale: WO 2006/061529

(56) Documents cités:
- EP-A- 0 660 335
- EP-A- 0 895 250
- DE-A1- 2 856 243
- DE-A1- 3 716 294
- DE-A1- 4 322 499

## Description

### DOMAINE TECHNIQUE

La présente invention se rapporte de façon générale au domaine de l'assainissement et/ou de la sécurisation d'une enceinte de confinement définie dans un dispositif de transport et/ou de stockage de matières radioactives, telles que par exemple des assemblages de combustible nucléaire.

### ÉTAT DE LA TECHNIQUE ANTÉRIEURE

Dans de telles enceintes de confinement renfermant des assemblages de combustible nucléaire, la température élevée favorise la transformation d'oxydes stables à l'ambiante en eau, et les radiations émises par les assemblages de combustible entraînent par radiolyse une transformation d'une partie de cette eau en hydrogène et en oxygène.

Ainsi, la présence d'hydrogène dans l'enceinte nuisant clairement à la sécurité de l'ensemble du dispositif de transport et/ou de stockage en raison des risques importants d'inflammabilité, d'explosivité et de montée en pression qu'elle génère, il est par conséquent habituellement recherché à éliminer cet hydrogène.

Pour ce faire, les enceintes de confinement peuvent être équipées d'un catalyseur de recombinaison de l'oxygène et de l'hydrogène en eau (ou recombineur catalytique d'hydrogène), au contact duquel l'hydrogène se combine avec l'oxygène présent dans l'enceinte de confinement pour former de l'eau suivant le mécanisme d'oxydation catalytique de l'hydrogène.

Naturellement, la présence d'eau à l'intérieur de cette enceinte provoque à son tour des risques importants de corrosion, de sorte qu'il peut alors s'avérer nécessaire de réaliser un assainissement de celle-ci, à savoir une élimination de l'eau, par exemple à l'aide d'un agent dessicant.

Bien entendu, il est noté que d'autres éléments néfastes que ceux cités ci-dessus peuvent être présents dans l'enceinte, ce qui peut conduire à introduire des moyens actifs supplémentaires appropriés en vu d'assainir et/ou de sécuriser cette même enceinte de confinement.

De l'art antérieur, on connaît un premier document EP-A-0 660 335, dans lequel des moyens actifs pour assainir et/ou sécuriser l'enceinte de confinement sont contenus dans un cavité étanche isolée par une membrane d'éclatement, dont la rupture est assurée par la réalisation d'une surpression à l'intérieur de l'enceinte de confinement.

Un avantage lié à cette solution réside dans le fait que la surpression engendrant l'éclatement de la membrane peut être mise en oeuvre seulement après que l'enceinte ait été drainée de l'eau borée, impliquant que les moyens actifs ne sont de ce fait jamais au contact de l'eau borée susceptible de les rendre inopérants, définitivement ou provisoirement.

Néanmoins, cette solution présente plusieurs inconvénients majeurs.

En effet, il est tout d'abord indiqué que les moyens actifs permettant d'assainir et/ou de sécuriser l'enceinte de confinement sont uniquement au contact de l'ambiance de cette enceinte par l'intermédiaire d'un orifice correspondant à la membrane éclatée. Ainsi, il ne peut pas se produire de courants de convection importants autour des moyens actifs, de sorte que l'efficacité globale de ces derniers reste relativement faible.

En outre, lors du conditionnement des assemblages de combustible nucléaire, il est bien entendu nécessaire de réaliser une opération supplémentaire de pressurisation pour générer un éclatement de la membrane, qui risque par ailleurs à cette occasion d'être morcelée et dispersée dans l'enceinte de confinement.

De l'art antérieur, on connaît également un second document EP-A-0 895 250, dans lequel l'enceinte de confinement est équipée d'un absorbant d'humidité résiduelle à tamis moléculaire, agencé verticalement au-dessous d'un orifice débouchant obturable pratiqué sur un couvercle du dispositif de transport et/ou de stockage. De plus, cet orifice débouchant est prévu dans des dimensions telles qu'il permet d'effectuer l'introduction de l'absorbant d'humidité résiduelle dans l'enceinte de confinement, ainsi que son extraction.

Si cette autre solution permet également d'éviter les risques liés à l'incompatibilité entre les moyens actifs et l'eau borée de la piscine résidant dans l'enceinte de confinement lors du chargement des assemblages de combustible, elle n'est cependant toujours pas totalement satisfaisante, notamment en raison du fait qu'elle est mise en oeuvre après conditionnement final de la cavité et qu'elle nécessite une opération supplémentaire.

### EXPOSÉ DE L'INVENTION

L'invention a donc tout d'abord pour but de proposer un dispositif pour assainir et/ou sécuriser une enceinte de confinement définie dans un dispositif de transport et/ou de stockage de matières radioactives telles que des assemblages de combustible nucléaire, ce dispositif remédiant au moins partiellement aux inconvénients mentionnés ci-dessus relatifs aux réalisations de l'art antérieur.

Plus précisément, le but de l'invention est de proposer un dispositif pour assainir et/ou sécuriser une enceinte de confinement qui présente une efficacité satisfaisante, une conception simple, et qui soit capable d'assurer une protection des moyens actifs contre l'eau borée rencontrée dans l'enceinte de confinement lors du chargement des assemblages de combustible.

En outre, l'invention a également pour but de présenter un dispositif de transport et/ou de stockage de matières radioactives telles que des assemblages de combustible nucléaire comprenant au moins un tel dispositif pour assainir et/ou sécuriser, ainsi qu'un procédé de conditionnement de matières radioactives sous eau mettant également en oeuvre au moins un tel dispositif pour assainir et/ou sécuriser l'enceinte de confinement.

Pour ce faire, l'invention a tout d'abord pour objet un dispositif pour assainir et/ou sécuriser une enceinte de confinement définie dans un dispositif de transport et/ou de stockage de matières radioactives telles que des assemblages de combustible nucléaire, le dispositif comprenant des moyens actifs capables d'assainir et/ou de sécuriser l'enceinte de confinement. Selon l'invention, ce dispositif comporte en outre :
- des moyens formant enveloppe à ouverture et délimitant une cavité ; et
- des moyens d'obturation de l'ouverture aptes à occuper une position d'ouverture ainsi qu'une position d'obturation dans laquelle ils ferment cette ouverture de façon à rendre étanche la cavité dans laquelle se situent les moyens actifs,
ce dispositif étant conçu de sorte que les moyens d'obturation soient aptes à être maintenus dans la position d'obturation par une différence de pression de valeur supérieure ou égale à une valeur prédéterminée, entre l'intérieur et l'extérieur de la cavité.

En d'autres termes, il est à comprendre que le dispositif selon l'invention est tel que les moyens actifs peuvent être enfermés dans une cavité étanche en maintenant les moyens d'obturation dans la position d'obturation, et ce uniquement par l'application d'une simple différence de pression entre l'intérieur et l'extérieur de cette cavité, obtenue de préférence en réalisant une mise sous vide de celle-ci traduisant une pression régnant à l'intérieur de la cavité plus faible que la pression régnant à l'extérieur de cette dernière.

Ainsi, dans cet état de fermeture, le dispositif peut alors se situer au sein de l'enceinte de confinement même lorsque de l'eau borée est encore présente dans celle-ci, sans crainte que les moyens actifs pour assainir et/ou sécuriser ne soient rendus inopérants par cette eau borée.

De plus, pour que ces moyens actifs pour assainir et/ou sécuriser remplissent leur fonction dans l'enceinte de confinement ayant été préalablement drainée, donc vidée de son eau borée, il suffit alors de rompre la différence de pression de valeur supérieure ou égale à la valeur prédéterminée, dans le but de provoquer un passage automatique de la position d'obturation à la position d'ouverture des moyens d'obturation de ce dispositif pour assainir et/ou sécuriser.

En effet, il est naturellement précisé que lorsque les moyens d'obturation occupent la position d'ouverture, la cavité ouverte permet alors aux moyens actifs de communiquer directement avec l'atmosphère de l'enceinte de confinement.

A titre indicatif, il est noté que la valeur prédéterminée de différence de pression mentionnée ci-dessus est notamment fonction de la conception du dispositif, et qu'elle peut par exemple correspondre à une valeur minimale assurant non seulement un maintien de l'obturation de l'ouverture de la cavité par les moyens d'obturation, mais également une étanchéité satisfaisante entre les moyens formant enveloppe à ouverture, et ces mêmes moyens d'obturation.

A cet égard, il est indiqué que la valeur prédéterminée n'a pas nécessairement à être fixée de manière à ce qu'elle provoque un déplacement automatique des moyens d'obturation de la position d'ouverture à la position de fermeture, cette manipulation pouvant effectivement être assurée manuellement par un opérateur, avant que la différence de pression entre l'intérieur et l'extérieur de la cavité ne soit appliquée dans le but de permettre un maintien de cette position d'obturation, synonyme de confinement pour les moyens actifs.

Par ailleurs, il a été mentionné le fait que la rupture de la différence de pression de valeur supérieure ou égale à la valeur prédéterminée provoquait un passage automatique de la position d'obturation à la position d'ouverture des moyens d'obturation. A ce titre, on entend par cette rupture non pas nécessairement une rupture totale de la différence de pression entre l'intérieur et l'extérieur de la cavité, mais un abaissement de cette différence de pression à une valeur conduisant au résultat désiré, à savoir la libération automatique de l'ouverture de la cavité. Naturellement, si comme cela vient d'être évoqué, la conception du dispositif est telle que la libération de l'ouverture peut être obtenue avant que la différence de pression entre l'intérieur et l'extérieur de la cavité ne soit nulle, il est évident que cette libération automatique est également rencontrée lorsque la différence de pression est inversée, à savoir quand la pression régnant à l'extérieur de la cavité est plus faible que la pression régnant à l'intérieur de cette dernière.

Le dispositif pour assainir et/ou sécuriser selon l'invention a été conçu de sorte que la position d'ouverture des moyens d'obturation soit retrouvée automatiquement lors de l'opération de séchage de l'enceinte de confinement suivant l'opération de drainage, cette opération de séchage étant en effet réalisée par mise en dépression de cette enceinte, qui voit donc sa pression diminuer et se rapprocher de celle de la cavité encore sous vide.

Une fois les moyens d'obturation en position d'ouverture, les moyens actifs se trouvent alors agencés au coeur de l'enceinte de confinement, ce qui permet d'accentuer leur efficacité par rapport à celle rencontrée dans le document EP-A-0 660 335 de l'art antérieur. En outre, comme cela ressort clairement de ce qui précède, sa conception et son fonctionnement restent relativement simples, et les moyens actifs pour assainir et/ou sécuriser sont entièrement protégés de l'eau borée dans laquelle peut être immergé le dispositif en configuration fermée.

Enfin, il est précisé qu'un autre avantage réside dans le fait que la conception et le fonctionnement de ce dispositif impliquent que celui-ci est facilement réarmable.

De préférence, on peut prévoir que le dispositif est conçu de telle sorte que le passage de la position d'obturation à la position d'ouverture des moyens d'obturation s'effectue automatiquement par gravité, après une rupture de la différence de pression de valeur supérieure ou égale à la valeur prédéterminée.

D'autre part, dans ce cas précis, il est de préférence prévu qu'après le passage automatique précité, les moyens d'obturation soient maintenus dans la position d'ouverture également par gravité.

Selon une autre alternative, le dispositif peut être conçu de telle sorte que le passage de la position d'obturation à la position d'ouverture des moyens d'obturation s'effectue automatiquement à l'aide de moyens élastiques interposés entre les moyens d'obturation et les moyens formant enveloppe, après une rupture de la différence de pression de valeur supérieure ou égale à la valeur prédéterminée. En revanche, dans ce cas spécifique, il est clair que le passage automatique est déclenché alors que la pression intérieure est encore inférieure à la pression extérieure. De plus, il est de préférence prévu qu'après le passage automatique précité, les moyens d'obturation soient maintenus dans la position d'ouverture également par l'intermédiaire des moyens élastiques.

Bien entendu, il est envisageable de prévoir un dispositif combinant la gravité et les moyens élastiques pour autoriser le passage de la position d'obturation à la position d'ouverture, sans sortir du cadre de l'invention.

Préférentiellement, le dispositif comporte des moyens permettant de réaliser une mise sous vide de la cavité.

Toujours de manière préférentielle, les moyens actifs sont montés sur les moyens d'obturation de manière à ce que lorsque ces derniers occupent la position d'ouverture dans laquelle ils sont situés à distance de l'ouverture, ces moyens actifs soient situés au moins partiellement en dehors de la cavité.

Naturellement, cette disposition particulière permet aux moyens actifs de présenter une efficacité globale accrue au sein de l'enceinte de confinement.

De préférence, les moyens d'obturation comportent des moyens de retenue permettant de maintenir ces moyens d'obturation dans la position d'ouverture. En outre, les moyens de retenue comportent un axe apte à coulisser à l'intérieur d'un cylindre creux solidaire des moyens formant enveloppe à ouverture, l'axe portant un épaulement situé à l'intérieur du cylindre creux et capable de venir au contact d'une butée prévue à une extrémité de ce cylindre creux.

Dans une telle configuration, on peut alors prévoir que l'axe est fixé à une plaque d'obturation portant les moyens actifs. Ainsi, lors du passage de la position d'obturation à la position d'ouverture, la plaque d'obturation et les moyens actifs sont déplacés conjointement. Bien entendu, ceci s'applique uniquement lorsqu'il est prévu que les moyens formant enveloppe restent fixes par rapport à l'enceinte et que les moyens d'obturation soient mis en mouvement par rapport à ces mêmes moyens formant enveloppe durant le passage automatique entre les deux positions, et non dans le cas inverse qui est naturellement également envisageable.

Toujours de manière préférentielle, les moyens actifs sont agencés au sein d'une ou de plusieurs cartouches, et peuvent comprendre un catalyseur de recombinaison de l'oxygène et de l'hydrogène en eau, ainsi qu'un agent dessicant. A titre illustratif, ces deux éléments peuvent être combinés et prendre la forme de palladium déposé sur de l'alumine, permettant conjointement d'assurer la catalyse ainsi que le séchage requis.

L'invention a également pour objet un dispositif de transport et/ou de stockage de matières radioactives telles que des assemblages de combustible nucléaire, comprenant au moins un dispositif pour assainir et/ou sécuriser tel que celui qui vient d'être présenté, ce dispositif étant situé dans l'enceinte de confinement et les moyens d'obturation occupant la position d'ouverture.

Enfin, l'invention a également pour objet un procédé de conditionnement sous eau de matières radioactives telles que des assemblages de combustible nucléaire, comprenant les étapes suivantes :
- mise sous vide de la cavité d'un dispositif pour assainir et/ou sécuriser tel que défini précédemment, de manière à ce que les moyens d'obturation soient maintenus dans la position d'obturation ;
- montage du dispositif pour assainir et/ou sécuriser à l'intérieur de l'enceinte de confinement d'un dispositif de transport et/ou de stockage de matières radioactives ;
- mise en piscine du dispositif de transport et/ou de stockage après avoir rempli d'eau l'enceinte de confinement ;
- chargement des matières radioactives à l'intérieur de l'enceinte de confinement ;
- fermeture du dispositif de transport et/ou de stockage à l'aide d'au moins un couvercle ;
- extraction du dispositif de transport et/ou de stockage hors de la piscine ;
- drainage de l'eau située à l'intérieur de l'enceinte de confinement ; et
- séchage de cette enceinte de confinement par mise en dépression de cette dernière, la mise en dépression étant réalisée de façon à entraîner un passage automatique de la position d'obturation à la position d'ouverture des moyens d'obturation du dispositif pour assainir et/ou sécuriser.
   Ainsi, comme cela a été évoqué précédemment, il est à comprendre qu'il existe une corrélation entre d'une part la valeur de la dépression appliquée pour obtenir la mise sous vide et la fermeture de la cavité, et d'autre part la valeur de la dépression appliquée dans l'enceinte de confinement pour assurer le séchage de celle-ci, cette corrélation étant déterminée de façon à ce que la différence de pression de valeur supérieure ou égale à la valeur prédéterminée entre l'intérieur et l'extérieur de la cavité, permettant de maintenir les moyens d'obturation dans la position d'obturation, soit suffisamment atténuée, voire réduite à néant ou encore inversée lors du séchage, pour permettre un passage automatique de la position d'obturation à la position d'ouverture des moyens d'obturation du dispositif pour assainir et/ou sécuriser.
   A titre d'exemple indicatif, la valeur des deux dépressions indiquées ci-dessus peut être identique.
   D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'un dispositif pour assainir et/ou sécuriser une enceinte de confinement définie dans un dispositif de transport et/ou de stockage d'assemblages de combustible nucléaire, selon un mode de réalisation préféré de la présente invention, des moyens d'obturation de ce dispositif se trouvant dans une position d'obturation ;
- la figure 2 représente une vue en coupe prise le long de la ligne II-II de la figure 1 ;
- la figure 3 représente une vue similaire à celle montrée sur la figure 1, les moyens d'obturation du dispositif se trouvant dans une position d'ouverture ;
- la figure 4 représente une vue similaire à celle montrée sur la figure 3, le dispositif se présentant sous une forme alternative de réalisation du mode de réalisation préféré représenté sur les figures 1 à 3 ; et
- les figures 5a à 5k représentent différentes étapes d'un procédé de conditionnement sous eau d'assemblages de combustible nucléaire, selon un mode de réalisation préféré de la présente invention.

### EXPOSÉ DÉTAILLÉ DE MODES DE RÉALISATION PRÉFÉRÉS

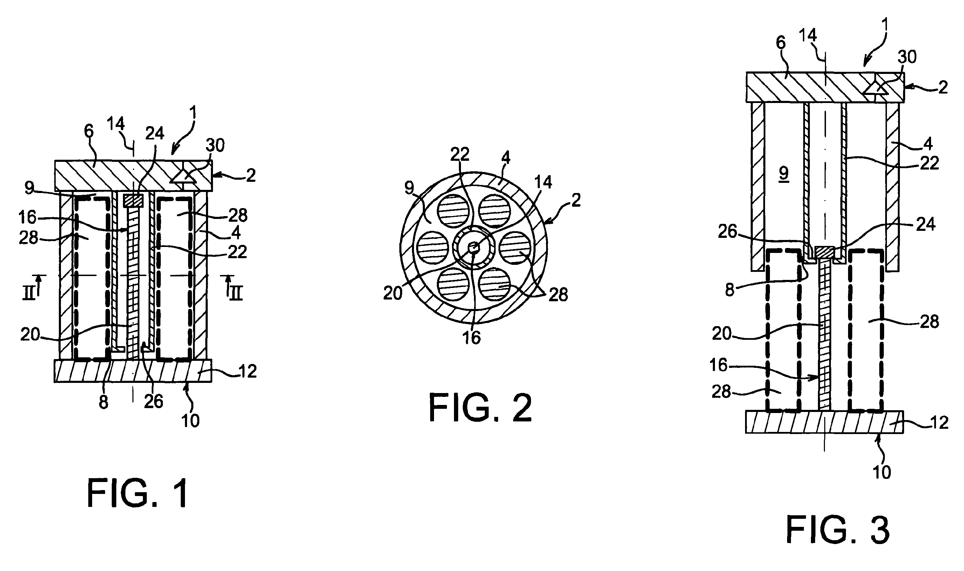

En référence tout d'abord aux figures 1 à 3, il est représenté un dispositif 1 pour assainir et/ou sécuriser une enceinte de confinement définie dans un dispositif (non représenté sur ces figures 1 à 3) de transport et/ou de stockage de matières radioactives telles que des assemblages de combustible nucléaire, selon un mode de réalisation préféré de la présente invention.

Le dispositif 1 comporte des moyens formant enveloppe à ouverture 2, qui prennent de préférence la forme d'un corps annulaire 4 fermé à l'une de ses deux extrémités par un couvercle 6, et définissant une ouverture 8 à l'autre de ces extrémités. En outre, le corps annulaire 4 délimite une cavité 9 ouverte uniquement au niveau de l'ouverture 8.

Dans la suite de la description des figures 1 à 3, par convention, on considère que le couvercle 6 se trouve au niveau d'une extrémité haute du corps annulaire 4, et que l'ouverture 8 se trouve au niveau d'une extrémité basse de ce même corps annulaire.

Le dispositif 1 comprend également des moyens d'obturation 10 de l'ouverture 8, ces moyens 10 comportant principalement une plaque d'obturation 12 orientée sensiblement perpendiculairement à un axe principal longitudinal 14 des moyens formant enveloppe 2. La plaque 12 peut être positionnée de façon à obturer l'ouverture 8 comme cela est représenté sur la figure 1 montrant donc les moyens d'obturation 10 dans une position d'obturation, et peut également se situer à distance de cette même ouverture 8 comme cela est représenté sur la figure 3 montrant les moyens d'obturation 10 dans une position d'ouverture.

A ce titre, les moyens d'obturation 10 comportent des moyens de retenue 16 permettant de maintenir les moyens d'obturation 10 dans la position d'ouverture, les moyens de retenue 16 autorisant ainsi la conservation d'un lien mécanique entre la plaque d'obturation 12 et les moyens formant enveloppe 2, lorsque cette plaque 12 est située à distance de l'ouverture 8.

Plus précisément, les moyens de retenue 16 comportent un axe ou cylindre plein 20 parallèle à l'axe principal longitudinal 14 du corps 4, cet axe 20 étant apte à coulisser à l'intérieur d'un cylindre creux 22 également orienté selon l'axe principal longitudinal 14, et étant solidaire du couvercle 6 des moyens formant enveloppe 2. De préférence et comme cela est clairement visible sur les figures 1 à 3, l'axe 20 et le cylindre creux 22 sont centrés sur l'axe principal longitudinal 14 du corps 4.

A cet égard, l'axe 20 porte la plaque 12 à l'une de ses extrémités ainsi qu'un épaulement 24 à l'autre de ses extrémités, l'épaulement 24 étant situé à l'intérieur du cylindre creux 22 et capable de venir au contact d'une butée 26 prévue à une extrémité basse de ce cylindre 22.

De cette manière, comme on peut le voir sur la figure 3, lorsque les moyens d'obturation 10 occupent la position d'ouverture, la plaque d'obturation 12 est maintenue à distance de l'ouverture 8 et perpendiculairement à l'axe principal longitudinal 14 par le contact entre l'épaulement 24 et la butée 26. De plus, la butée 26 du cylindre creux 22 se situant à proximité de cette ouverture 8, c'est donc la quasi-totalité de l'axe 20 qui fait saillie vers le bas lorsque les moyens d'obturation 10 occupent la position d'ouverture.

Toujours en référence aux figures 1 à 3, le dispositif 1 présente des moyens actifs capables d'assainir et/ou de sécuriser l'enceinte de confinement, ces moyens actifs étant par exemple agencés au sein d'une ou de plusieurs cartouches 28, qui sont quant à elle solidarisées à l'une de leurs extrémités à la plaque d'obturation 12. A titre d'exemple illustratif et comme cela est le mieux visible sur la figure 2, les cartouches 28 sont de préférence agencées parallèlement à l'axe principal longitudinal 14 autour de l'axe 20 des moyens de retenue 16, de manière à pouvoir être introduits dans la cavité 9 lors d'un passage des moyens d'obturation 10 de la position d'ouverture à la position d'obturation.

Ainsi, on peut effectivement voir que dans la position d'obturation de la figure 1, les cartouches 28 sont situées entre le corps annulaire 4 et le cylindre creux 22, dans la cavité annulaire 9 dont l'ouverture 8 est fermée de façon étanche par la plaque d'obturation 12 solidaire des extrémités basses de ces cartouches 28. En revanche, dans la position d'ouverture montrée sur la figure 3, les cartouches 28 font saillie vers le bas par rapport au corps annulaire 4, et présentent alors chacune au moins partie située en dehors de la cavité 9, destinée à être agencée au coeur de l'enceinte de confinement à assainir et/ou sécuriser.

Les moyens actifs pour assainir et/ou sécuriser présents dans les cartouches 28 comprennent de préférence un catalyseur de recombinaison de l'oxygène et de l'hydrogène en eau ainsi qu'un agent dessicant, pour les raisons qui ont été évoquées ci-dessus dans la partie art antérieur.

A titre d'exemple illustratif, l'agent dessicant est choisi parmi le gel de silice, les tamis moléculaires, les agents complexants déshydratés tels que par exemple le sulfate de cuivre ou les produits chimiques hygroscopiques tels que le chlorure de calcium, le sulfate de magnésium, ou le pentoxyde de phosphore, éventuellement sur un matériau support. Le catalyseur de recombinaison est quant à lui choisi en particulier parmi les catalyseurs enrobés de platine ou de palladium. Toujours à titre d'exemple préféré, les moyens actifs peuvent prendre la forme de palladium déposé sur de l'alumine, permettant conjointement d'assurer la catalyse ainsi que le séchage requis.

Naturellement, ces moyens actifs sont déterminés et retenus en fonction de la nature des éléments que l'on recherche à éliminer à l'intérieur de l'enceinte de confinement du dispositif de transport et/ou de stockage, dans le but d'assainir et/ou de sécuriser cette même enceinte.

Avec le dispositif 1, lorsque les moyens d'obturation 10 occupent la position d'ouverture dans laquelle la plaque d'obturation 12 reste maintenue par gravité à distance de l'ouverture 8, la position d'obturation peut alors être obtenue en exerçant une simple action manuelle visant à translater cette plaque 12 jusqu'à ce que celle-ci vienne au contact du corps annulaire 4 et ferme l'ouverture 8 de la cavité 9.

Ensuite, pour que cette position d'obturation soit maintenue quelle que soit l'orientation du dispositif 1 dans l'espace, et donc afin que la plaque d'obturation 12 ne libère pas l'ouverture 8 sous l'effet de la gravité, il est appliqué une différence de pression de valeur supérieure ou égale à une valeur prédéterminée, entre l'intérieur et l'extérieur de la cavité 9.

La différence de pression mentionnée ci-dessus est réalisée en effectuant une mise sous vide de la cavité 9, par l'intermédiaire d'un orifice 30 prévu à cet effet sur le couvercle 6 des moyens formant enveloppe 2, ainsi qu'à l'aide de moyens de pompage (non représentés).

A titre d'exemple illustratif, la valeur prédéterminée de différence de pression peut par exemple être fixée à environ 850 mbar, et est de toute façon retenue de sorte que le contact entre la plaque d'obturation 12 et le corps annulaire 4 soit étanche, afin que les moyens actifs agencés à l'intérieur de la cavité 9 ne soient pas perturbés par le milieu extérieur. A ce titre, la différence de pression de valeur supérieure ou égale à la valeur prédéterminée peut donc être obtenue en effectuant une mise sous vide de la cavité 9 générant une pression d'environ 150 mbar à l'intérieur de celle-ci.

En outre, lorsque le dispositif 1 est correctement positionné, la position d'ouverture des moyens d'obturation 10 peut alors être retrouvée automatiquement par gravité en rompant la différence de pression de valeur supérieure ou égale à la valeur prédéterminée régnant de part et d'autre de la plaque d'obturation 12. En effet, si l'on considère les moyens formant enveloppe 2 fixes par rapport à l'enceinte de confinement, la mise en dépression de cette dernière engendre une diminution de la différence de pression entre l'intérieur et l'extérieur de la cavité 9, et finit par conduire la plaque 12 ainsi que les cartouches 28 à tomber automatiquement par gravité, jusqu'à ce qu'ils soient retenus dans la position d'ouverture par le contact entre l'épaulement 24 et la butée 26.

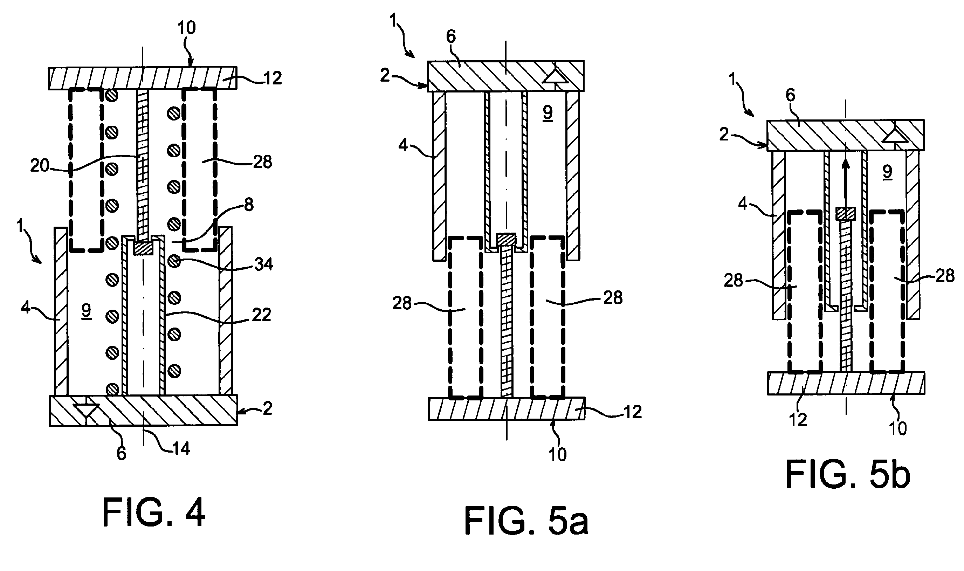

En référence à présent à la figure 4, on peut voir le dispositif 1 se présentant sous une forme alternative de réalisation du mode de réalisation préféré qui vient d'être décrit en référence aux figures 1 à 3. Par conséquent, les éléments portant les mêmes références numériques correspondent à des éléments identiques ou similaires.

A ce titre, il est indiqué que l'unique différence entre ces deux dispositifs 1 réside dans le fait que celui se présentant sous la forme alternative comporte des moyens élastiques interposés entre les moyens formant enveloppe 2 et les moyens d'obturation 10, ces moyens élastiques étant conçus de manière à générer le passage automatique de la position d'obturation à la position d'ouverture, après une rupture de la différence de pression de valeur supérieure ou égale à la valeur prédéterminée.

De préférence, les moyens élastiques prennent la forme d'un simple ressort de compression 34 contactant une surface interne du couvercle 6 ainsi qu'une surface interne de la plaque d'obturation 12, ce ressort 34 étant par exemple situé autour du cylindre creux 22.

Avec un tel agencement, le passage automatique dans la position d'ouverture ne s'effectuant plus ou pas exclusivement par gravité mais à l'aide des moyens élastiques, le dispositif 1 est alors avantageusement susceptible de fonctionner de façon satisfaisante quelle que soit l'orientation de ce dernier à l'intérieur de l'enceinte de confinement.

Pour illustrer cela, comme on peut le voir sur la figure 4, le dispositif 1 peut en effet se trouver dans une position retournée par rapport à celle des figures 1 à 3, à savoir avec le couvercle 6 se trouvant au niveau d'une extrémité basse du corps annulaire 4, et avec l'ouverture 8 se trouve au niveau d'une extrémité haute de ce même corps annulaire. A cet égard, il est noté que les moyens élastiques permettent également de maintenir les moyens d'obturation 10 dans la position d'ouverture dans laquelle les cartouches 28 sont situées en dehors de la cavité 9, et évitent ainsi à ces moyens 10 de retomber par gravité dans la position d'obturation.

Naturellement, comme cela a été évoqué précédemment, la présence des moyens élastiques implique que le passage automatique des moyens d'obturation 10 est déclenché alors que la différence de pression de part et d'autre de la plaque 12 n'est pas encore nulle, c'est-à-dire à un moment où la pression à l'intérieur de la cavité 9 est encore inférieure à la pression régnant à l'extérieur de celle-ci.

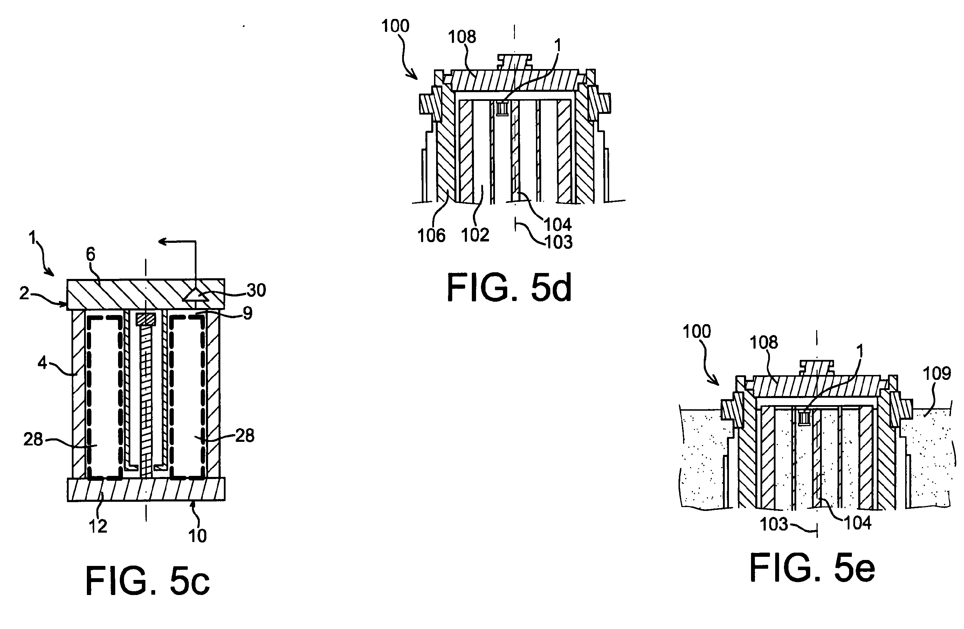

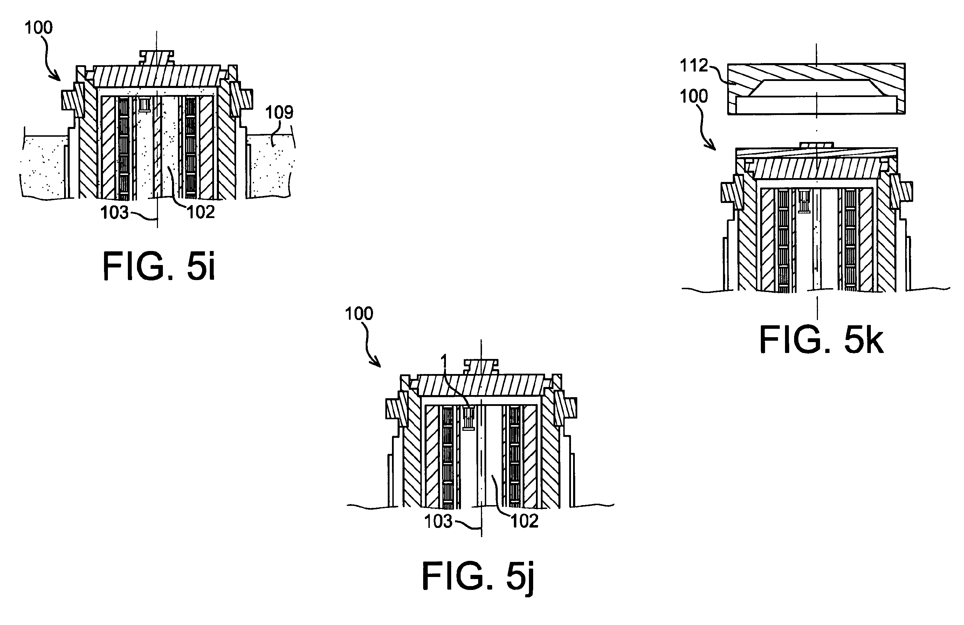

En référence à présent aux figures 5a à 5k, il est représenté différentes étapes d'un procédé de conditionnement d'assemblages de combustible nucléaire sous eau, selon un mode de réalisation préféré de la présente invention employant un ou plusieurs dispositifs 1 tels que celui montré sur les figures 1 à 3. Naturellement, le procédé de conditionnement pourrait également être mis en oeuvre à l'aide d'un ou plusieurs dispositifs 1 tels que celui montré sur la figure 4 en position d'ouverture, sans sortir du cadre de l'invention.

De plus, pour des raisons de clarté de la description, on considérera par la suite que le procédé ne requiert la présence que d'un seul dispositif 1 pour assainir et/ou sécuriser l'enceinte de confinement.

Tout d'abord en référence aux figures 5a à 5c, les moyens d'obturation 10 du dispositif 1 sont placés manuellement de la position d'ouverture à la position d'obturation, puis la cavité 9 subit une mise sous vide par l'intermédiaire de l'orifice 30, jusqu'à ce que la différence de pression régnant de part et d'autre de la plaque d'obturation 12 soit supérieure ou égale à la valeur prédéterminée assurant le blocage des moyens d'obturation 10 en position d'obturation, ainsi que le confinement des moyens actifs à l'intérieur de la cavité 9.

Le dispositif 1 peut alors être assemblé à l'intérieur de l'enceinte de confinement 102 d'un dispositif 100 pour le transport et/ou le stockage des assemblages de combustible nucléaire à conditionner, avant que ce dispositif 100 ne soit immergé en piscine. A titre d'exemple illustratif, le dispositif 1 peut être monté sur un panier de rangement 104 agencé à l'intérieur de l'enceinte 102, sur un récipient 106 définissant latéralement cette même enceinte, ou encore sur un couvercle 108 fermant cette dernière.

Dans la suite de la description, comme cela est visible sur les figures, on considère que le dispositif 1 est monté sur le panier 104.

Quel que soit le choix effectué pour le montage du dispositif 1, l'ouverture postérieure de ce dernier étant destinée à s'opérer automatiquement par gravité, l'orientation du dispositif 1 à l'intérieur de l'enceinte 102 est alors de préférence celle montrée sur les figures 1 à 3, à savoir la plaque d'obturation 12 vers le bas et le couvercle 6 vers le haut, avec le dispositif 100 se trouvant dans une position dans laquelle il repose sur son fond (non représenté). Bien entendu, dans un tel cas où l'axe principal longitudinal 14 du dispositif 1 est destiné à être parallèle à un axe principal longitudinal 103 du dispositif 100, c'est donc les moyens formant enveloppe 2 qui sont solidarisés au panier 104.

Une fois le dispositif 1 assemblé, le/les couvercles 108 du dispositif 100 sont montés sur le récipient 106 comme cela est montré sur la figure 5d, et l'ensemble du dispositif de transport et/ou de stockage 100 peut alors être immergé dans une piscine 109 comme représenté schématiquement sur la figure 5e, après que l'enceinte de confinement 102 ait été remplie d'eau.

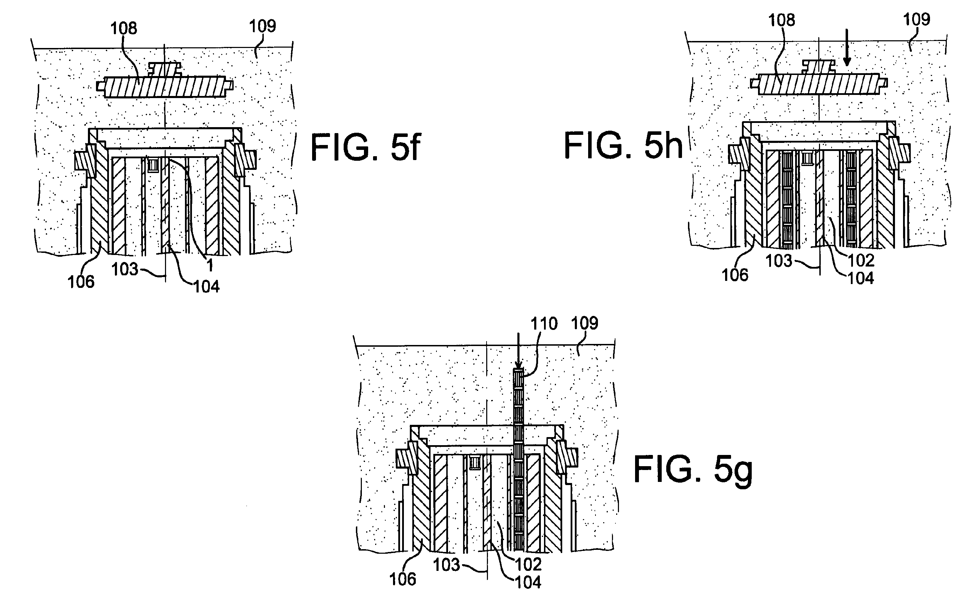

Sur la figure 5f, on peut voir que le/les couvercles 108 sont à nouveau retirés pour permettre le chargement des assemblages de combustible nucléaire 110 à l'intérieur de l'enceinte de confinement 102, dans le panier de rangement 104 portant le dispositif 1, comme cela apparaît clairement au vu de la figure 5g.

Ensuite, lorsque le chargement des assemblages 110 est terminé, le récipient 106 est à nouveau obturé à l'aide du/des couvercles 108 comme montré sur la figure 5h, le dispositif 1 se situant toujours intégralement dans la piscine 109, et le dispositif 1 pour assainir et/ou sécuriser se trouvant toujours dans sa configuration de fermeture protégeant les moyens actifs de l'eau borée présente dans la piscine 109.

Le dispositif 100, dont l'enceinte de confinement 102 est à présent fermée de façon étanche et remplie d'eau, subit ensuite un déplacement en vu d'être extrait de la piscine 109, comme le représente schématiquement la figure 5i.

Par la suite, il est mis en oeuvre une étape de drainage de l'eau située à l'intérieur de l'enceinte de confinement 102, d'une manière conventionnelle connue de l'homme du métier.

Toujours de façon connue, il est ensuite procédé à une étape de séchage de cette même enceinte de confinement 102, par mise en dépression de cette dernière, par exemple par l'intermédiaire d'un orifice (non référencé) prévu à cet effet dans le couvercle 108.

La particularité du procédé de conditionnement réside dans le fait que la mise en dépression effectuée lors du séchage est réalisée de façon à entraîner simultanément un passage automatique de la position d'obturation à la position d'ouverture des moyens d'obturation 10 du dispositif 1.

En effet, la valeur de la dépression appliquée à l'intérieur de la cavité 9 pour obtenir la mise sous vide de celle-ci et la valeur de la dépression appliquée dans l'enceinte de confinement 102 pour assurer le séchage de cette dernière sont fixées l'une en fonction de l'autre de sorte que lors du séchage, la différence de pression entre l'intérieur et l'extérieur de cette cavité 9 soit suffisamment atténuée pour engendrer le passage automatique précité, par gravité.

A titre d'exemple illustratif, les deux valeurs de dépression précitées sont chacune fixées à environ 150 mbar.

Ainsi, comme le montre la figure 5j, le dispositif 100 dispose d'une enceinte de confinement 102 équipée d'une dispositif 1 pour l'assainir et/ou la sécuriser qui se présente dans une configuration d'ouverture, c'est-à-dire dans une configuration où les moyens actifs sont directement au contact de l'atmosphère de cette enceinte 102.

Pour terminer, le procédé peut comporter des étapes classiques telles que la mise sous gaz neutre, par exemple l'hélium, de l'enceinte de confinement 102, ou encore l'installation de capots protecteurs 112 aux extrémités supérieure et inférieure du dispositif 100.

Il est rappelé que l'invention concerne également un dispositif 100 de transport et/ou de stockage de matières radioactives, tel que celui représenté sur la figure 5j sur laquelle le dispositif 1 comprend des moyens d'obturation en position d'ouverture.

Enfin, il est noté à titre indicatif que dans le cas du transport humide des assemblages de combustible nucléaire, le dispositif 1 est assemblé à l'intérieur de l'enceinte de confinement de manière à être toujours situé dans le ciel gazeux de cette dernière et non dans la partie liquide de celle-ci, naturellement afin de préserver l'efficacité des moyens actifs pour assainir et/ou sécuriser. Bien évidemment, cette contrainte est inexistante dans le cas du transport à sec.

Bien entendu, diverses modifications peuvent être apportées par l'homme du métier aux dispositifs 1, 100 et au procédé de conditionnement qui viennent d'être décrits, uniquement à titre d'exemples non limitatifs. A cet égard, il est noté que l'invention s'applique non seulement aux assemblages de combustible nucléaire comme cela vient d'être présenté, mais également à tout autre type de matières radioactives.

## Revendications

1. Dispositif (100) de transport et/ou de stockage de matières radioactives (110), comprenant une enceinte de confinement (102) ainsi qu'au moins un dispositif (1) pour assainir et/ou sécuriser ladite enceinte de confinement (102), ledit dispositif (1), situé dans ladite enceinte de confinement (102), comprenant des moyens actifs capables d'assainir et/ou de sécuriser ladite enceinte de confinement (102),
**caractérisé en ce que** ledit dispositif (1) comporte en outre :
- des moyens formant enveloppe (2) à ouverture (8) et délimitant une cavité (9) ; et
- des moyens d'obturation (10) de ladite ouverture (8) aptes à occuper une position d'ouverture ainsi qu'une position d'obturation dans laquelle ils ferment ladite ouverture (8) de façon à rendre étanche ladite cavité (9) dans laquelle se situent lesdits moyens actifs,
ledit dispositif (1) étant conçu de sorte que lesdits moyens d'obturation (10) soient aptes à être maintenus dans ladite position d'obturation par une différence de pression de valeur supérieure ou égale à une valeur prédéterminée, entre l'intérieur et l'extérieur de ladite cavité (9).

2. Dispositif (100) selon la revendication 1, **caractérisé en ce que** lesdits moyens d'obturation (10) occupent, à l'intérieur de ladite enceinte de confinement (102), ladite position d'ouverture.

3. Dispositif (100) selon la revendication 1 ou la revendication 2, **caractérisé en ce que** le dispositif (1) est conçu de telle sorte que le passage de ladite position d'obturation à ladite position d'ouverture des moyens d'obturation (10) s'effectue automatiquement par gravité, après une rupture de ladite différence de pression de valeur supérieure ou égale à la valeur prédéterminée.

4. Dispositif (100) selon la revendication 1 ou la revendication 2, **caractérisé en ce que** le dispositif (1) est conçu de telle sorte que le passage de ladite position d'obturation à ladite position d'ouverture des moyens d'obturation (10) s'effectue automatiquement à l'aide de moyens élastiques (34) interposés entre lesdits moyens d'obturation (10) et lesdits moyens formant enveloppe (2), après une rupture de ladite différence de pression de valeur supérieure ou égale à la valeur prédéterminée.

5. Dispositif (100) selon l'une quelconque des revendications précédentes, **caractérisé en ce que** le dispositif (1) comporte de plus des moyens (30) permettant de réaliser une mise sous vide de ladite cavité (9).

6. Dispositif (100) selon l'une quelconque des revendications précédentes, **caractérisé en ce que** lesdits moyens actifs sont montés sur les moyens d'obturation (10), de manière à ce que lorsque ces derniers occupent la position d'ouverture dans laquelle ils sont situés à distance de ladite ouverture (8), ces moyens actifs soient situés au moins partiellement en dehors de ladite cavité (9).

7. Dispositif (100) selon l'une quelconque des revendications précédentes, **caractérisé en ce que** lesdits moyens d'obturation (10) comportent des moyens de retenue (16) permettant de maintenir ces moyens d'obturation (10) dans ladite position d'ouverture.

8. Dispositif (100) selon la revendication 7, **caractérisé en ce que** lesdits moyens de retenue (16) comportent un axe (20) apte à coulisser à l'intérieur d'un cylindre creux (22) solidaire des moyens formant enveloppe (2) à ouverture (8), l'axe (20) portant un épaulement (24) situé à l'intérieur du cylindre creux (22) et capable de venir au contact d'une butée (26) prévue à une extrémité de ce cylindre creux (22).

9. Dispositif (100) selon la revendication 8, **caractérisé en ce que** l'axe (20) est fixé à une plaque d'obturation (12) portant lesdits moyens actifs.

10. Dispositif (100) selon l'une quelconque des revendications précédentes, **caractérisé en ce que** lesdits moyens actifs sont agencés au sein d'une ou de plusieurs cartouches (28).

11. Dispositif (100) selon l'une quelconque des revendications précédentes, **caractérisé en ce que** lesdits moyens actifs comprennent un catalyseur de recombinaison de l'oxygène et de l'hydrogène en eau, ainsi qu'un agent dessicant.

12. Procédé de conditionnement de matières radioactives (110) sous eau, à l'aide d'au moins un dispositif (1) pour assainir et/ou sécuriser une enceinte de confinement (102), ledit dispositif (1) comprenant des moyens actifs capables d'assainir et/ou de sécuriser ladite enceinte de confinement (102), ledit dispositif (1) comporte en outre :
- des moyens formant enveloppe (2) à ouverture (8) et délimitant une cavité (9) ; et
- des moyens d'obturation (10) de ladite ouverture (8) aptes à occuper une position d'ouverture ainsi qu'une position d'obturation dans laquelle ils ferment ladite ouverture (8) de façon à rendre étanche ladite cavité (9) dans laquelle se situent lesdits moyens actifs,
ledit dispositif (1) étant conçu de sorte que lesdits moyens d'obturation (10) soient aptes à être maintenus dans ladite position d'obturation par une différence de pression de valeur supérieure ou égale à une valeur prédéterminée, entre l'intérieur et l'extérieur de ladite cavité (9),
ledit procédé comprenant les étapes suivantes :
- mise sous vide de la cavité (9) du dispositif (1), de manière à ce que lesdits moyens d'obturation (10) soient maintenus dans ladite position d'obturation ;
- montage dudit dispositif (1) pour assainir et/ou sécuriser à l'intérieur de l'enceinte de confinement (102) d'un dispositif (100) de transport et/ou de stockage de matières radioactives (110) ;
- mise en piscine (109) dudit dispositif (100) de transport et/ou de stockage après avoir rempli d'eau l'enceinte de confinement (102) ;
- chargement des matières radioactives (110) à l'intérieur de ladite enceinte de confinement (102) ;
- fermeture dudit dispositif (100) de transport et/ou de stockage à l'aide d'au moins un couvercle (108) ;
- extraction dudit dispositif (100) de transport et/ou de stockage hors de la piscine (109) ;
- drainage de l'eau située à l'intérieur de ladite enceinte de confinement (102) ; et
- séchage de ladite enceinte de confinement (102) par mise en dépression de cette dernière, ladite mise en dépression étant réalisée de façon à entraîner un passage automatique de ladite position d'obturation à ladite position d'ouverture des moyens d'obturation (10) dudit dispositif (1) pour assainir et/ou sécuriser.

13. Dispositif (1) pour assainir et/ou sécuriser une enceinte de confinement (102) définie dans un dispositif (100) de transport et/ou de stockage de matières radioactives (110), ledit dispositif comprenant des moyens actifs capables d'assainir et/ou de sécuriser ladite enceinte de confinement (102), et comportant en outre :
- des moyens formant enveloppe (2) à ouverture (8) et délimitant une cavité (9) ; et
- des moyens d'obturation (10) de ladite ouverture (8) aptes à occuper une position d'ouverture ainsi qu'une position d'obturation dans laquelle ils ferment ladite ouverture (8) de façon à rendre étanche ladite cavité (9) dans laquelle se situent lesdits moyens actifs,
ledit dispositif étant conçu de sorte que lesdits moyens d'obturation (10) soient aptes à être maintenus dans ladite position d'obturation par une différence de pression de valeur supérieure ou égale à une valeur prédéterminée, entre l'intérieur et l'extérieur de ladite cavité (9),
**caractérisé en ce que** lesdits moyens d'obturation (10) comportent des moyens de retenue (16) permettant de maintenir ces moyens d'obturation (10) dans ladite position d'ouverture.

14. Dispositif (1) selon la revendication 13, **caractérisé en ce qu'**il est conçu de telle sorte que le passage de ladite position d'obturation à ladite position d'ouverture des moyens d'obturation (10) s'effectue automatiquement par gravité, après une rupture de ladite différence de pression de valeur supérieure ou égale à la valeur prédéterminée.

15. Dispositif (1) selon la revendication 13, **caractérisé en ce qu'**il est conçu de telle sorte que le passage de ladite position d'obturation à ladite position d'ouverture des moyens d'obturation (10) s'effectue automatiquement à l'aide de moyens élastiques (34) interposés entre lesdits moyens d'obturation (10) et lesdits moyens formant enveloppe (2), après une rupture de ladite différence de pression de valeur supérieure ou égale à la valeur prédéterminée.

16. Dispositif (1) selon l'une quelconque des revendications 13 à 15, **caractérisé en ce qu'**il comporte de plus des moyens (30) permettant de réaliser une mise sous vide de ladite cavité (9).

17. Dispositif (1) selon l'une quelconque des revendications 13 à 16, **caractérisé en ce que** lesdits moyens actifs sont montés sur les moyens d'obturation (10), de manière à ce que lorsque ces derniers occupent la position d'ouverture dans laquelle ils sont situés à distance de ladite ouverture (8), ces moyens actifs soient situés au moins partiellement en dehors de ladite cavité (9).

18. Dispositif (1) selon l'une quelconque des revendications 13 à 17, **caractérisé en ce que** lesdits moyens de retenue (16) comportent un axe (20) apte à coulisser à l'intérieur d'un cylindre creux (22) solidaire des moyens formant enveloppe (2) à ouverture (8), l'axe (20) portant un épaulement (24) situé à l'intérieur du cylindre creux (22) et capable de venir au contact d'une butée (26) prévue à une extrémité de ce cylindre creux (22).

19. Dispositif (1) selon la revendication 18, **caractérisé en ce que** l'axe (20) est fixé à une plaque d'obturation (12) portant lesdits moyens actifs.

20. Dispositif (1) selon l'une quelconque des revendications 13 à 19, **caractérisé en ce que** lesdits moyens actifs sont agencés au sein d'une ou de plusieurs cartouches (28).

21. Dispositif (1) selon l'une quelconque des revendications 13 à 20, **caractérisé en ce que** lesdits moyens actifs comprennent un catalyseur de recombinaison de l'oxygène et de l'hydrogène en eau, ainsi qu'un agent dessicant.

## Claims

1. Device (100) for transporting and/or storing radioactive materials (110), as well as a device (1) for cleaning and/or securing a safe containment (102), said device (1) located in said safe containment (102) incorporating means capable of cleaning and/or securing said safe containment (102),
**characterized in that** it further comprises:
- means forming a casing (2) with an opening (8) and defining a cavity (9); and
- means for closing (10) said opening (8) capable of assuming an open position as well as a closed position in which they close said opening (8) so as to seal said cavity (9) in which said active means are located, which device (1) is designed so that said closure means (10) are capable of being maintained in said closed position by a pressure difference having a value greater than or equal to a predetermined value, between the inside and the outside of said cavity (9).

2. Device (100) according to claim 1, **characterized in that** said closure means (10) occupy, within said safe containment (102), said opening position.

3. Device (100) according to claim 1 or 2, **characterized in that** the device (1) is designed so that the closure means (10) can be switched from said closed position to said open position automatically by means of gravity, after a rupture from said pressure difference having a value greater than or equal to the predetermined value.

4. Device (100) according to claim 1 or 2, **characterized in that** the device (1) is designed so that the closure means (10) can be switched from said closed position to said open position automatically by way of elastic means (34) inserted between said closure means (10) and said means forming a casing (2), after a rupture from said pressure difference having a value greater than or equal to the predetermined value.

5. Device (100) according to any one of the previous claims, **characterized in that** the device (1) also comprises means (30) for creating a vacuum in said cavity (9).

6. Device (100) according to any one of the previous claims, **characterized in that** said active means are mounted on the closure means (10), so that when the latter assume the open position in which they are located at a distance from said opening (8), these active means are located at least partially outside of said cavity (9).

7. Device (100) according to any one of the previous claims, **characterized in that** said closure means (10) comprise holding means (16) enabling said closure means (10) to be maintained in said open position.

8. Device (100) according to claim 7, **characterized in that** said holding means (16) comprise a pin (20) capable of sliding into a hollow cylinder (22) secured to the means forming a casing (2) with an opening (8), wherein the pin (20) has a shoulder (24) located inside the hollow cylinder (22) and capable of coming into contact with an abutment (26) at one end of said hollow cylinder (22).

9. Device (100) according to claim 8, **characterized in that** the pin (20) is attached to a closure plate (12) bearing said active means.

10. Device (100) according to any one of the previous claims, **characterized in that** said active means are arranged in one or more cartridges (28).

11. Device (100) according to any one of the previous claims, **characterized in that** said active means include a catalyst for recombining oxygen and hydrogen into water, as well as a drying agent.

12. Method for underwater packaging of radioactive materials (100), with the aid of at least one device (1) for cleaning and/or securing a safe confinement (102), said device (1) incorporating active means able to clean and/or secure said safe confinement (102), said device (1) also comprising:
- means forming a casing (2) with an opening (8) and defining a cavity (9) and
- means (10) for closing said opening (8) capable of assuming an open position, as well as a closed position in which they close said opening (8) so as to seal said cavity (9) in which said active means are located,
- said device (1) being designed so that closure means (10) are capable of being maintained in said closed position by a pressure difference having a value equal to or greater than a predetermined value, between the inside and outside of said cavity (9),
- said method including the following steps:
- creating a vacuum in the cavity (9) of the device (1) so that said closure means (10) are maintained in said closed position;
- fitting said cleaning and/or securing device (1) inside the safe containment (102) of a device for transporting and/or storing radioactive materials (110);
- placing the transportation and/or storage device (100) in a pool (109) after filling the safe containment (102) with water;
- loading the radioactive materials (110) into the safe containment (102);
- closing the transportation and/or storage device (100) using at least one cover (108);
- extracting the transportation and/or storage device (100) from the pool (109);
- draining the water located inside the safe containment (102); and
- drying said safe containment (102) by creating a depression in the latter, which depression is created so as to cause the closure means (10) of the cleaning and/or securing device (1) to automatically switch from the closed position to the open position.

13. Device (1) for cleaning and/or securing a safe confinement (102) defined in a device (100) for transporting and/or storing radioactive materials (110), said device incorporating active means able to clean and/or secure said safe confinement (102) and also including:
- means forming a casing (2) with an opening (8) and defining a cavity (9) and
- means (10) for closing said opening (8) capable of assuming an open position as well as a closed position in which they close said opening (8) so as to seal said cavity (9) in which said active means are located,
- said device being designed so that closure means (10) are capable of being maintained in said closed position by a pressure difference having a value equal to or greater than a predetermined value, between the inside and outside of said cavity (9),
**characterized in that** said closure means (10) incorporate retaining means (16) making it possible to maintain said closure means (10) in said open position.

14. Device (1) according to claim 13, **characterized in that** it is so designed that the passage from said closure position to said open position of the closure means (10) takes place automatically by gravity, after a rupture from said pressure difference having a value equal to or greater than the predetermined value.

15. Device (1) according to claim 13, **characterized in that** it is designed in such a way that the passage from said closure position to said open position of closure means (10) takes place automatically with the aid of elastic means (34) placed between said closure means (10) and said means forming the casing (2), after a rupture from said pressure difference with a value equal to or greater than the predetermined value.

16. Device (1) according to any one of the claims 13 to 15, **characterized in that** it also includes means (30) making it possible to form a vacuum in said cavity (9).

17. Device (1) according to any one of the claims 13 to 16, **characterized in that** said active means are fitted to said closure means (10) in such a way that when the latter occupy the open position in which they are at a distance from said opening (8), said active means are at least partly located outside said cavity (9).

18. Device (1) according to any one of the claims 13 to 17, **characterized in that** the retaining means comprise a pin (20) able to slide within a hollow cylinder (22) integral with the means forming the casing (2) having the opening (8), said pin (20) having a shoulder (24) located within the hollow cylinder (22) and able to come into contact with an abutment (26) at one end of said hollow cylinder (22).

19. Device (1) according to claim 18, **characterized in that** the pin (20) is fixed to a closure plate (12) carrying said active means.

20. Device (1) according to any one of the claims 13 to 19, **characterized in that** said active means are located in one or more cartridges (28).

21. Device (1) according to any one of the claims 13 to 20, **characterized in that** said active means include a catalyst for recombining oxygen and hydrogen into water, as well as a drying agent.

## Patentansprüche

1. Vorrichtung (100) zum Transport und/oder zum Lagern von radioaktiven Stoffen (110), umfassend einen Schutzmantel (102) sowie mindestens eine Vorrichtung (1) zum Entseuchen/Reinigen und/oder Sichern des Schutzmantels (102), wobei die Vorrichtung (1), die sich in dem Schutzmantel (102) befindet, aktive Mittel aufweist, die den Schutzmantel (102) Entseuchen/Reinigen und/oder sichern können,
**dadurch gekennzeichnet, dass** die Vorrichtung (1) außerdem umfasst:
- Mittel, die eine Umhüllung (2) mit einer Öffnung (8) bilden und einen Hohlraum (9) umgrenzen, und
- Verschlussmittel (10) der Öffnung (8), die eine Öffnungsposition sowie eine Verschlussposition einnehmen können, in der sie die Öffnung (8) so verschließen, dass sie den Hohlraum (9), in dem sich die aktiven Mittel befinden, abdichten können,
wobei die Vorrichtung (1) derart ausgelegt ist, dass die Verschlussmittel (10) durch einen Druckunterschied mit einem Wert, der größer oder gleich einem vorbestimmten Wert ist, zwischen dem Inneren und dem Äußeren des Hohlraums (9) in der Verschlussposition gehalten werden können.

2. Vorrichtung (100) nach Anspruch 1, **dadurch gekennzeichnet, dass** die Verschlussmittel (10) im Inneren des Schutzmantels (102) die Öffnungsposition einnehmen.

3. Vorrichtung (100) nach Anspruch 1 oder Anspruch 2, **dadurch gekennzeichnet, dass** die Vorrichtung (1) derart konzipiert ist, dass der Übergang von der Verschlussposition zur Öffnungsposition der Verschlussmittel (10) automatisch durch Schwerkraft erfolgt, und zwar nach einem Überschreiten des Druckunterschieds mit einem höheren oder gleichen Wert wie der vorbestimmte Wert.

4. Vorrichtung (100) nach Anspruch 1 oder Anspruch 2, **dadurch gekennzeichnet, dass** die Vorrichtung (1) derart konzipiert ist, dass der Übergang von der Verschlussposition zur Öffnungsposition der Verschlussmittel (10) automatisch mit Hilfe elastischer Mittel (34) erfolgt, die zwischen die Verschlussmittel (10) und die eine Umhüllung (2) bildenden Mittel eingefügt sind, und zwar nach einem Überschreiten des Druckunterschieds mit höherem oder gleichem Wert wie der vorbestimmte Wert.

5. Vorrichtung (100) nach einem der vorangehenden Ansprüche, **dadurch gekennzeichnet, dass** die Vorrichtung (1) außerdem Mittel (30) aufweist, die eine Evakuierung des Hohlraums (9) ermöglichen.

6. Vorrichtung (100) nach einem der vorangehenden Ansprüche, **dadurch gekennzeichnet, dass** die aktiven Mittel an den Verschlussmitteln (10) derart angebracht sind, dass, wenn letztere die Öffnungsposition einnehmen, in der sie sich im Abstand zu der Öffnung (8) befinden, diese aktiven Mittel zumindest teilweise außerhalb des Hohlraums (9) gelegen sind.

7. Vorrichtung (100) nach einem der vorangehenden Ansprüche, **dadurch gekennzeichnet, dass** die Verschlussmittel (10) Rückhaltemittel (16) aufweisen, welche diese Verschlussmittel (10) in der Öffnungsposition halten können.

8. Vorrichtung (100) nach Anspruch 7, **dadurch gekennzeichnet, dass** die Rückhaltemittel (16) eine Achse (20) aufweisen, die im Inneren eines Hohlzylinders (22), der mit den eine Umhüllung (2) mit einer Öffnung (8) bildenden Mitteln einstückig bzw. fest verbunden ist, gleiten kann,
wobei die Achse (20) eine Schulter (24) trägt, die sich im Inneren des Hohlzylinders (22) befindet und mit einem Anschlag (26) in Kontakt kommen kann, der an einem Ende dieses Hohlzylinders (22) vorgesehen ist.

9. Vorrichtung (100) nach Anspruch 8, **dadurch gekennzeichnet, dass** die Achse (20) an einer Verschlussplatte (12) befestigt ist, welche die aktiven Mittel trägt.

10. Vorrichtung (100) nach einem der vorangehenden Ansprüche, **dadurch gekennzeichnet, dass** die aktiven Mittel an einer oder mehreren Kartusche(n) (28) angeordnet sind.

11. Vorrichtung (100) nach einem der vorangehenden Ansprüche, **dadurch gekennzeichnet, dass** die aktiven Mittel einen Rekombinationskatalysator von Sauerstoff und Wasserstoff in Wasser sowie ein Trockenmittel umfassen.

12. Konditionierungsverfahren von radioaktiven Stoffen (110) unter Wasser mit Hilfe mindestens einer Vorrichtung (1) zum Entseuchen/Reinigen und/oder Sichern eines Schutzmantels (102), wobei die Vorrichtung (1) aktive Mittel aufweist, welche den Schutzmantel (102) entseuchen/reinigen und/oder sichern können, wobei die Vorrichtung (1) außerdem umfasst:
- Mittel, die eine Umhüllung (2) mit einer Öffnung (8) bilde und einen Hohlraum (9) umgrenzen, und
- Verschlussmittel (10) der Öffnung (8), die eine Öffnungsposition sowie eine Verschlussposition einnehmen können, in der sie die Öffnung (8) so verschließen, dass sie den Hohlraum (9), in dem sich die aktiven Mittel befinden, abdichten können,
wobei die Vorrichtung (1) derart ausgelegt ist, dass die Verschlussmittel (10) durch einen Druckunterschied mit einem Wert, der größer oder gleich einem vorbestimmten Wert ist, zwischen dem Inneren und dem Äußeren des Hohlraums (9) in der Verschlussposition gehalten werden können,
wobei das Verfahren die folgenden Schritte umfasst:
- Evakuieren des Hohlraums (9) der Vorrichtung (1) derart, dass die Verschlussmittel (10) in der Verschlussposition gehalten werden,
- Montage der Vorrichtung (1) zum Entseuchen/Reinigen und/oder Sichern im Inneren des Schutzmantels (102) einer Vorrichtung (100) zum Transport und/oder zur Lagerung von radioaktiven Stoffen (110),
- Einbringen der Transport- und/oder Lagervorrichtung (100) in ein Bad (109), nachdem der Schutzmantel (102) mit Wasser gefüllt worden ist,
- Laden von radioaktiven Stoffen (110) ins Innere des Schutzmantels (102),
- Schließen der Transport- und/oder Lagervorrichtung (100) mit Hilfe mindestens einer Abdeckung (108),
- Herausnehmen der Transport- und/oder Lagervorrichtung (100) aus dem Bad (109),
- Abziehen von im Inneren des Schutzmantels (102) befindlichem Wasser, und
- Trocknen des Schutzmantels (102), indem dieser einem Unterdruck ausgesetzt wird, wobei die Unterdruckbehandlung so durchgeführt wird, dass ein automatischer Übergang von der Verschlussposition zu der Öffnungsposition der Verschlussmittel (10) der Vorrichtung (1) zum Entseuchen/Reinigen und/oder Sichern bewirkt wird.

13. Vorrichtung (1) zum Entseuchen/Reinigen und/oder Sichern eines Schutzmantels (102), der in einer Transport- und/oder Lagervorrichtung (100) radioaktiver Stoffe (110) festgelegt ist, wobei die Vorrichtung aktive Mittel aufweist, welche den Schutzmantel (102) entseuchen/reinigen und/oder sichern können, und wobei sie außerdem umfasst:
- Mittel, die eine Umhüllung (2) mit einer Öffnung (8) bilden und einen Hohlraum (9) umgrenzen, und
- Verschlussmittel (10) der Öffnung (8), die eine Öffnungsposition sowie eine Verschlussposition einnehmen können, in der sie die Öffnung (8) so verschließen, dass sie den Hohlraum (9), in dem sich die aktiven Mittel befinden, abdichten können,
wobei die Vorrichtung (1) derart ausgelegt ist, dass die Verschlussmittel (10) in der Verschlussposition durch einen Druckunterschied mit einem Wert, der größer oder gleich einem vorbestimmten Wert ist, zwischen dem Inneren und dem Äußeren des Hohlraums (9) gehalten werden können,
**dadurch gekennzeichnet, dass** die Verschlussmittel (10) Rückhaltemittel (16) aufweisen, welche diese Verschlussmittel (10) in der Öffnungsposition halten können.

14. Vorrichtung (1) nach Anspruch 13, **dadurch gekennzeichnet, dass** die Vorrichtung (1) derart konzipiert ist, dass der Übergang von der Verschlussposition zur Öffnungsposition der Verschlussmittel (10) automatisch durch Schwerkraft erfolgt, und zwar nach einem Überschreiten des Druckunterschieds mit höherem oder gleichem Wert wie der vorbestimmte Wert.

15. Vorrichtung (1) nach Anspruch 13, **dadurch gekennzeichnet, dass** die Vorrichtung (1) derart konzipiert ist, dass der Übergang von der Verschlussposition zur Öffnungsposition der Verschlussmittel (10) automatisch mit Hilfe elastischer Mittel (34) erfolgt, die zwischen die Verschlussmittel (10) und die eine Umhüllung (2) bildenden Mittel eingefügt sind, und zwar nach einem Überschreiten des Druckunterschieds mit höherem oder gleichem Wert wie der vorbestimmte Wert.

16. Vorrichtung (1) nach einem der Ansprüche 13 bis 15, **dadurch gekennzeichnet, dass** sie außerdem Mittel (30) aufweist, die eine Evakuierung des Hohlraums (9) ermöglichen.

17. Vorrichtung (1) nach einem der Ansprüche 13 bis 16, **dadurch gekennzeichnet, dass** die aktiven Mittel an den Verschlussmitteln (10) derart angebracht sind, dass, wenn letztere die Öffnungsposition einnehmen, in der sie sich im Abstand zu der Öffnung (8) befinden, diese aktiven Mittel zumindest teilweise außerhalb des Hohlraums (9) gelegen sind.

18. Vorrichtung (1) nach einem der Ansprüche 13 bis 17, **dadurch gekennzeichnet, dass** die Rückhaltemittel (16) eine Achse (20) aufweisen, die im Inneren eines Hohlzylinders (22), der mit den eine Umhüllung (2) mit einer Öffnung (8) bildenden Mitteln einstückig bzw. fest verbunden ist, gleiten kann, wobei die Achse (20) eine Schulter (24) trägt, die sich im Inneren des Hohlzylinders (22) befindet und mit einem Anschlag (26) in Kontakt kommen kann, der an einem Ende dieses Hohlzylinders (22) vorgesehen ist.

19. Vorrichtung (1) nach Anspruch 18, **dadurch gekennzeichnet, dass** die Achse (20) an einer Verschlussplatte (12) befestigt ist, welche die aktiven Mittel trägt.

20. Vorrichtung (1) nach einem der Ansprüche 13 bis 19, **dadurch gekennzeichnet, dass** die aktiven Mittel an einer oder mehreren Kartusche(n) (28) angeordnet sind.

21. Vorrichtung (1) nach einem der Ansprüche 13 bis 20, **dadurch gekennzeichnet, dass** die aktiven Mittel einen Rekombinationskatalysator von Sauerstoff und Wasserstoff in Wasser sowie ein Trockenmittel umfassen.
